# FASCICULE DE BREVET EUROPEEN

(11) **EP 3 589 481 B1**
(45) Date de publication et mention de la délivrance du brevet: **11.08.2021**
(21) Numéro de dépôt: 18707953.8
(22) Date de dépôt: 15.02.2018
(51) Int. Cl.: B29D 30/06, F16B 5/00, F16B 5/06

(54) **ENSEMBLE D'ELEMENTS MOULANTS POUR MOULE DE PNEUMATIQUE**
SATZ VON FORMELEMENTEN FÜR REIFENFORMEN
SET OF MOULDING ELEMENTS FOR TYRE MOULD

(30) Priorité: 28.02.2017 FR 1770199
(43) Date de publication de la demande: 08.01.2020
(73) Titulaire: Compagnie Générale des Etablissements Michelin, 63000 Clermont-Ferrand (FR)
(72) Inventeur: MASSIS, Frédéric, 63040 Clermont-Ferrand Cedex 9 (FR); NADREAU, Laurent, 63040 Clermont-Ferrand Cedex 9 (FR)
(74) Mandataire: Noel, Luminita
(86) Numéro de dépôt international: PCT/FR2018/050360
(87) Numéro de publication internationale: WO 2018/158519

(56) Documents cités:
- WO-A1-2008/068216
- WO-A1-2016/200392
- CN-A- 104 389 869
- GB-A- 2 434 187
- JP-A- H0 390 317
- JP-A- H1 158 386
- US-A- 3 570 571

## Description

### DOMAINE TECHNIQUE DE L'INVENTION

La présente invention concerne un élément moulant pour le moulage d'une découpure dans une bande de roulement d'un pneumatique. L'invention concerne également un ensemble d'éléments moulants formant un réseau d'éléments moulants dans un moule.

### ETAT DE LA TECHNIQUE ANTERIEURE

On connait du document FR2939712 un ensemble d'éléments moulants formant un réseau. Les éléments moulants, ici des cordons ou des lamelles, sont fabriqués d'un seul tenant par frittage laser. Ces éléments moulants permettent de mouler des découpures dans une bande de roulement d'un pneumatique.

Le réseau formé par les éléments moulants peut avoir une taille importante. Dans certaines conditions de fabrication, ce réseau peut être soumis à des déformations non négligeables, ce qui le fait sortir des tolérances de fabrication acceptables. De plus, pour fabriquer un tel réseau, il est nécessaire de prévoir une machine de frittage laser adéquate et plus particulièrement un plateau de réception du réseau de grande dimension, ce qui augmente les coûts de fabrication. En outre, lorsqu'un élément moulant du réseau est non conforme, c'est tout le réseau qui doit être mis au rébus.

La demande WO2016/200392 décrit un ensemble d'éléments moulants adaptés pour insertion dans un moule de pneumatique, l'ensemble comprenant des lamelles longitudinales et transversales, ces dernières étant fixées de part et d'autre des lamelles longitudinales par insertion dans des bourrelets prévus en zone basse des lamelles longitudinales. Une telle architecture permet l'assemblage des lamelles transversales lorsque les lamelles longitudinales sont pourvues des bourrelets. Or, de tels bourrelets ont un impact déterminant sur la forme et le fonctionnement des découpures de la bande de roulement du pneumatique. Si un tel bourrelet n'est pas souhaité, il devient alors impossible de fixer les lamelles transversales.

Le document JPH 0390317-A divulgue les caractéristiques du préambule de la revendication indépendante 1.

Il existe donc un besoin de trouver une solution permettant d'obtenir un ensemble d'éléments moulants de bonne tenue mécanique, mais sans impacter les agencements des lamelles à obtenir au niveau de la bande du roulement des pneumatiques à mouler.

### DEFINITIONS

Par « pneumatique », on entend tous les types de bandages élastiques soumis à une pression interne ou non.

Par « bande de roulement » d'un pneumatique, on entend une quantité de matériau en caoutchouc délimitée par des surfaces latérales et par deux surfaces principales dont l'une est destinée à entrer en contact avec une chaussée lorsque le pneumatique roule et l'autre est orienté vers l'intérieur du pneu.

Par « découpure dans une bande de roulement » on entend soit une découpure fine également appelée incision, soit une découpure large également appelée rainure.

Par « élément moulant », on entend un élément disposé dans un moule apte à réaliser des découpure dans la bande de roulement d'un pneumatique. Un élément moulant apte à réaliser une incision dans la bande de roulement est appelé une lamelle. Un élément moulant apte à réaliser une rainure dans la bande de roulement est appelé un cordon.

Par « zone d'ancrage d'un élément moulant» on entend la portion de l'ensemble d'éléments moulants se trouvant insérée dans la masse du moule lorsque ce dernier est mis en œuvre.

Par « zone de moulage d'un élément moulant », on entend la portion de l'élément moulant se trouvant hors de la masse du moule lorsque ce dernier est mis en œuvre, et servant à mouler les découpures de la bande de roulement du pneumatique.

### EXPOSE DE L'INVENTION

L'invention concerne un élément moulant pour le moulage d'une découpure dans une bande de roulement d'un pneumatique. L'élément moulant comporte un moyen d'assemblage, ce moyen d'assemblage étant apte à lier cet élément moulant avec un autre élément moulant pour former un ensemble d'éléments moulants.

L'invention prévoit un ensemble d'éléments moulants adapté pour être inséré dans un moule pour le moulage d'un pneumatique, ledit ensemble comprenant une lamelle principale et au moins une lamelle secondaire, ladite lamelle secondaire comprenant une première partie de lamelle secondaire et une deuxième partie de lamelle secondaire, lesdites première partie et deuxième partie de lamelle secondaire s'étendant de part et d'autre de la lamelle principale et ledit ensemble d'éléments moulants comprenant des moyens d'assemblage de la lamelle secondaire avec la lamelle principale, les moyens d'assemblage consistant soit en une protubérance agencée sur la lamelle principale, prévue pour insertion dans une ouverture prévue à cet effet sur la lamelle secondaire, soit en au moins un plot d'ancrage agencé sur la lamelle principale, prévu pour coopérer avec une encoche sur la lamelle secondaire.

Cet ensemble d'éléments moulants est destiné à être rapporté dans un moule. Une telle architecture permet de former un assemblage de lamelles sans excroissance venant s'immiscer dans le volume de moulage et susceptible d'affecter la forme de la sculpture du pneumatique moulé. L'assemblage obtenu est transparent et sans impact sur la définition des sculptures. Les moyens d'assemblage facilitent la réalisation de pré-assemblages avant mise en place dans un moule. Les assemblages résultant n'affectent pas la forme de la sculpture du pneumatique et donnent de multiples possibilités pour positionner des lamelles en vis-à-vis quelque soit la forme de la lamelle principale.

L'imbrication entre les éléments moulants permet de garantir leur bonne tenue mécanique lors de la cuisson du pneumatique. De plus, l'ensemble d'éléments moulants comportant différents éléments moulants ainsi imbriqués est plus robuste. En outre, les différents éléments moulants peuvent toujours être réalisés par frittage laser, ce qui permet d'obtenir des formes d'éléments moulants très complexes. On notera que l'ensemble d'élément moulants comportant les éléments assemblés entre eux peut être directement fixé dans un moule, par exemple, par collage. En variante, les éléments moulants de l'ensemble d'éléments moulants peuvent être « noyés » ensemble dans de l'aluminium, préalablement à la mise en place de l'ensemble d'éléments moulants dans le moule.

De manière avantageuse, la deuxième partie de lamelle secondaire prolonge la première partie de lamelle secondaire.

Selon un mode de réalisation avantageux, la lamelle secondaire comprend une partie intermédiaire entre la première partie et la seconde partie de lamelle secondaire.

Selon un autre mode de réalisation avantageux, la partie intermédiaire est sensiblement dans l'axe de la lamelle principale.

De manière avantageuse, la hauteur de la protubérance est inférieure à 25% de la hauteur de la lamelle principale, et de préférence inférieure à 15% de cette hauteur.

Selon une variante avantageuse, la hauteur de l'ouverture correspond à la hauteur de la protubérance.

La protubérance comprend avantageusement un rebord externe. Cette variante de réalisation permet une meilleure rigidité de l'ensemble après assemblage.

De manière avantageuse, la hauteur du plot d'ancrage est au moins égale à 30% de la hauteur de la lamelle principale.

Egalement de manière avantageuse, la largeur du plot d'ancrage et la largeur de l'encoche sont sensiblement identiques.

Selon un mode de réalisation avantageux, les moyens d'assemblage prévoient au moins deux plots d'ancrage à chaque extrémité sur la tranche de la lamelle principale. Ce mode de réalisation permet un assemblage rigide tant sur la base que sur la zone haute de la lamelle.

Selon une variante de réalisation, les plots d'ancrage ont des hauteurs différentes.

Selon un mode de réalisation avantageux, les moyens d'assemblage sont compris dans l'enveloppe de la lamelle principale et de la lamelle secondaire.

De manière avantageuse, les moyens d'assemblage de la lamelle secondaire avec la lamelle principale sont venus de matière avec leurs lamelles respectives.

Selon encore un mode de réalisation avantageux, la première partie de la lamelle secondaire et la deuxième partie de la lamelle secondaire forment un angle **α** différent de 180°.

La première partie de lamelle secondaire et la deuxième partie de lamelle secondaire forment avantageusement une lamelle unitaire.

### BREVE DESCRIPTION DES FIGURES

Tous les détails de réalisation sont donnés dans la description qui suit, complétée par les figures 1 à 7, présentées uniquement à des fins d'exemples non limitatifs, et dans lesquelles :
- la **figure 1** est une vue en perspective d'un autre exemple d'ensemble d'éléments moulants assemblés ;
- les **figures 2 et 3** sont des vues en perspective de l'exemple de la figure 4 avec la lamelle principale et la lamelle secondaire non assemblées ;
- la **figure 4** est une vue de dessus d'un autre exemple d'ensemble d'éléments moulants assemblés, dans lequel la lamelle secondaire comprend une pièce intermédiaire;
- la **figure 5** est une vue en perspective d'un autre exemple d'ensemble d'éléments moulants assemblés ;
- la **figure 6** est une vue en perspective de l'exemple de la figure 5 avec la lamelle principale et la lamelle secondaire non assemblées ;
- la **figure 7** est une vue en perspective d'une variante de réalisation d'une lamelle principale.

### DESCRIPTION DETAILLEE DE L'INVENTION

Dans la description qui va suivre, des éléments sensiblement identiques ou similaires seront désignés par des références identiques.

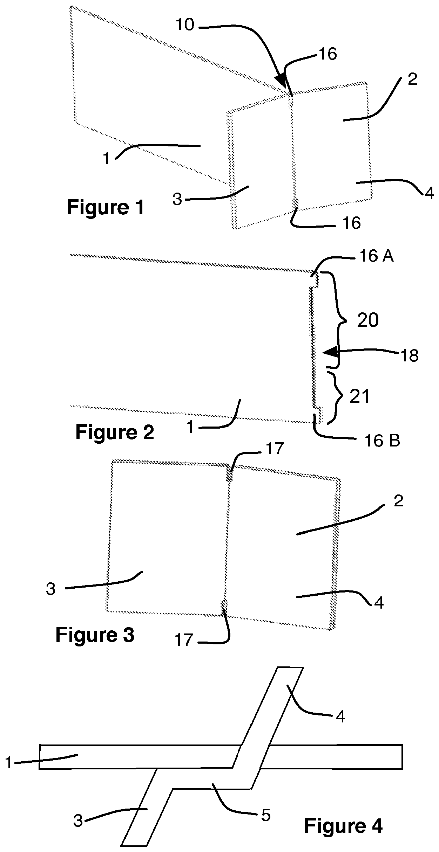

Les figures 1 à 3 illustrent un premier exemple de réalisation d'un ensemble d'éléments moulants adapté pour être inséré dans un moule pour le moulage d'un pneumatique. Au moment du moulage, les éléments moulants permettent de réaliser le moulage de découpures dans une bande de roulement d'un pneumatique.

Tel qu'illustré, l'ensemble comprend une lamelle principale 1 et au moins une lamelle secondaire 2, par exemple montées en opposition avec interposition de la lamelle principale.

La lamelle secondaire 2 est prévue en deux parties, soit une première partie 3 de lamelle secondaire et une deuxième 4 partie de lamelle secondaire, ces deux parties étant dans le prolongement l'une de l'autre. La fixation de la lamelle secondaire à la lamelle principale est mise en œuvre par des moyens d'assemblage 10 pouvant prendre diverses formes, selon les cas.

Dans l'exemple de réalisation des figures 1 à 4, les moyens d'assemblage sont constitués par au moins un plot d'ancrage 16 sur la lamelle principale et une encoche 17 sur lamelle secondaire. Dans l'exemple de réalisation illustré, deux plots d'ancrage 16 sont prévus, soit un à chaque extrémité sur la tranche 18 de la lamelle principale.

Différentes variantes sont envisageables pour la mise en place des éléments correspondants plot 16 et encoche 17. Parmi les variantes envisagées, on prévoit des plots d'ancrage pourvus de hauteurs différentes.

De préférence, la hauteur du plot d'ancrage 16 est au moins égal à 30% de la hauteur de la lamelle principale. La largeur du plot d'ancrage 16 est inférieure à celle de l'encoche 17 afin de faciliter l'assemblage. En variante, leur largeurs sont sensiblement identiques.

Dans l'exemple de réalisation de la figure 4, la lamelle secondaire comprend une partie intermédiaire 5 entre la première partie et la seconde partie de lamelle secondaire. La partie intermédiaire 5 est agencée de façon à longer la lamelle principale. Un tel agencement permet par exemple de décaler légèrement les deux parties de la lamelle secondaire.

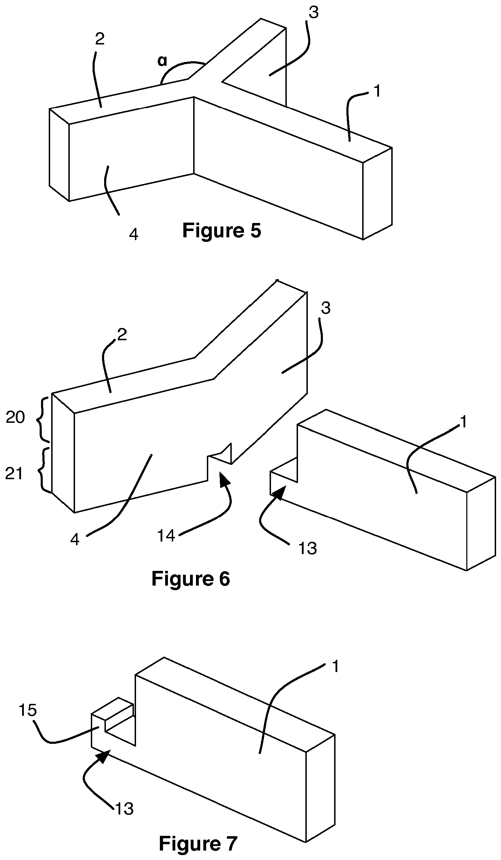

Dans l'exemple de réalisation des figures 5 à 7, les moyens d'assemblage sont constitués par une protubérance 13 sur la lamelle principale et une ouverture 14 à la base de la lamelle secondaire. La hauteur de l'ouverture correspond à la hauteur de la protubérance. Par ailleurs, la hauteur de la protubérance est inférieure à 25% de la hauteur de la lamelle principale, et de préférence inférieure à 15% à cette hauteur.

Différentes variantes sont envisageables pour la mise en place des éléments correspondants protubérance 13 et ouverture 14. Parmi les variantes envisagées, la protubérance comprend un rebord externe 15. Cette variante de réalisation est illustrée à la figure 10.

Comme on peut l'observer sur les figures illustrant les diverses mises en oeuvre de l'invention, les moyens d'assemblage sont conçus de façon à être compris dans l'enveloppe de la lamelle principale et de la lamelle secondaire, c'est-à-dire que ces moyens ne sont pas prohéminents de cette enveloppe et n'interfèrent donc pas avec les zones de moulage, par exemple en créant des surépaisseurs de lamelles, réduisant d'autant les profils des sculptures de la bande de roulement.

Les éléments moulants sont fabriqués par frittage laser. En variante, ces éléments moulants sont fabriqués par tout autre procéde de fabrication, tel que la fonderie, l'usinage, ou autre.

### Numéros de référence employés sur les figures

- 1: Lamelle principale
- 2: Lamelle secondaire
- 3: Première partie de lamelle secondaire
- 4: Deuxième partie de lamelle secondaire
- 5: Partie intermédiaire
- 10: Moyens d'assemblage
- 13: Protubérance
- 14: Ouverture
- 15: Rebord externe
- 16: Plot d'ancrage
- 17: Encoche
- 18: Tranche
- 20: Zone moulante
- 21: Zone d'ancrage

## Revendications

1. Ensemble d'éléments moulants adapté pour être inséré dans un moule pour le moulage d'un pneumatique, ledit ensemble comprenant une lamelle principale (1) et au moins une lamelle secondaire (2), ladite lamelle secondaire (2) comprenant une première partie (3) de lamelle secondaire et une deuxième (4) partie de lamelle secondaire, lesdites première partie (3) et deuxième partie (4) de lamelle secondaire s'étendant de part et d'autre de la lamelle principale (1) et ledit ensemble d'éléments moulants comprenant des moyens d'assemblage (10) de la lamelle secondaire (2) avec la lamelle principale (1) ;
**caractérisé en ce que** les moyens d'assemblage consistent ;
- en une protubérance (13) agencée sur la lamelle principale, prévue pour insertion dans une ouverture (14) prévue à cet effet sur la lamelle secondaire ;
- ou en au moins un plot d'ancrage (16) agencé sur la lamelle principale, prévu pour coopérer avec une encoche (17) sur la lamelle secondaire.

2. Ensemble d'éléments moulants selon la revendication 1, **caractérisé en ce que** la deuxième (4) partie de lamelle secondaire prolonge la première partie de lamelle secondaire.

3. Ensemble d'éléments moulants selon l'une des revendications 1 ou 2, **caractérisé en ce que** la lamelle secondaire comprend une partie intermédiaire (5) entre la première partie et la seconde partie de lamelle secondaire.

4. Ensemble d'éléments moulants selon la revendication 3, **caractérisé en ce que** la partie intermédiaire (5) est sensiblement dans l'axe de la lamelle principale.

5. Ensemble d'éléments moulants selon l'une quelconque des revendications 1 à 3, **caractérisé en ce que** la hauteur de la protubérance (13) est inférieure à 25% de la hauteur de la lamelle principale, et de préférence inférieure à 15% de cette hauteur.

6. Ensemble d'éléments moulants selon l'une quelconque des revendications 1 à 3, **caractérisé en ce que** la hauteur de l'ouverture correspond à la hauteur de la protubérance.

7. Ensemble d'éléments moulants selon l'une quelconque des revendications 1 à 3, **caractérisé en ce que** la protubérance comprend un rebord externe (15).

8. Ensemble d'éléments moulants selon l'une quelconque des revendications 1 à 3, **caractérisé en ce que** la hauteur du plot d'ancrage (16) est au moins égale à 30% de la hauteur de la lamelle principale.

9. Ensemble d'éléments moulants selon l'une quelconque des revendications 1 à 3, **caractérisé en ce que** la largeur du plot d'ancrage (16) et la largeur de l'encoche (17) sont sensiblement identiques.

10. Ensemble d'éléments moulants selon l'une quelconque des revendications 1 à 3, **caractérisé en ce que** les moyens d'assemblage comprennent au moins deux plots d'ancrage (16), agencés à chaque extrémité sur la tranche (18) de la lamelle principale.

11. Ensemble d'éléments moulants selon l'une quelconque des revendications 1 à 3, **caractérisé en ce que** les plots d'ancrage (16) ont des hauteurs différentes.

12. Ensemble d'éléments moulants selon l'une quelconque des revendications précédentes, **caractérisé en ce que** les moyens d'assemblage (10) sont compris dans l'enveloppe de la lamelle principale et de la lamelle secondaire.

13. Ensemble d'éléments moulants selon l'une quelconque des revendications précédentes, **caractérisé en ce que** les moyens d'assemblage (10) sont venus de matière avec leurs lamelles respectives.

14. Ensemble d'éléments moulants selon l'une quelconque des revendications précédentes, **caractérisé en ce que** la première partie de lamelle secondaire (3) et la deuxième partie de lamelle secondaire (4) forment un angle **α** différent de 180°.

15. Ensemble d'éléments moulants selon l'une quelconque des revendications précédentes, **caractérisé en ce que** la première partie de lamelle secondaire (3) et la deuxième partie de lamelle secondaire (4) forment une lamelle unitaire.

## Patentansprüche

1. Satz von Formelementen, welcher dafür eingerichtet ist, in eine Form zum Formen eines Reifens eingesetzt zu werden, wobei der Satz eine Hauptlamelle (1) und wenigstens eine Sekundärlamelle (2) umfasst, wobei die Sekundärlamelle (2) einen ersten Sekundärlamellenteil (3) und einen zweiten Sekundärlamellenteil (4) umfasst, wobei sich der erste (3) und der zweite Sekundärlamellenteil (4) beiderseits der Hauptlamelle (1) erstrecken und der Satz von Formelementen Mittel zum Zusammenbau (10) der Sekundärlamelle (2) mit der Hauptlamelle (1) umfasst;
**dadurch gekennzeichnet, dass** die Mittel zum Zusammenbau bestehen:
- aus einem an der Hauptlamelle angeordneten Vorsprung (13), der zum Einsetzen in eine Öffnung (14) vorgesehen ist, die zu diesem Zweck an der Sekundärlamelle vorgesehen ist;
- oder aus wenigstens einem an der Hauptlamelle angeordneten Verankerungsstück (16), das dafür vorgesehen ist, mit einem Einschnitt (17) an der Sekundärlamelle zusammenzuwirken.

2. Satz von Formelementen nach Anspruch 1, **dadurch gekennzeichnet, dass** der zweite (4) Sekundärlamellenteil den ersten Sekundärlamellenteil verlängert.

3. Satz von Formelementen nach einem der Ansprüche 1 oder 2, **dadurch gekennzeichnet, dass** die Sekundärlamelle einen Zwischenteil (5) zwischen dem ersten und dem zweiten Sekundärlamellenteil umfasst.

4. Satz von Formelementen nach Anspruch 3, **dadurch gekennzeichnet, dass** der Zwischenteil (5) im Wesentlichen in der Achse der Hauptlamelle angeordnet ist.

5. Satz von Formelementen nach einem der Ansprüche 1 bis 3, **dadurch gekennzeichnet, dass** die Höhe des Vorsprungs (13) kleiner als 25 % der Höhe der Hauptlamelle und vorzugsweise kleiner als 15 % dieser Höhe ist.

6. Satz von Formelementen nach einem der Ansprüche 1 bis 3, **dadurch gekennzeichnet, dass** die Höhe der Öffnung der Höhe des Vorsprungs entspricht.

7. Satz von Formelementen nach einem der Ansprüche 1 bis 3, **dadurch gekennzeichnet, dass** der Vorsprung eine äußere Randleiste (15) umfasst.

8. Satz von Formelementen nach einem der Ansprüche 1 bis 3, **dadurch gekennzeichnet, dass** die Höhe des Verankerungsstücks (16) wenigstens gleich 30 % der Höhe der Hauptlamelle ist.

9. Satz von Formelementen nach einem der Ansprüche 1 bis 3, **dadurch gekennzeichnet, dass** die Breite des Verankerungsstücks (16) und die Breite des Einschnitts (17) im Wesentlichen identisch sind.

10. Satz von Formelementen nach einem der Ansprüche 1 bis 3, **dadurch gekennzeichnet, dass** die Mittel zum Zusammenbau wenigstens zwei Verankerungsstücke (16) umfassen, die jeweils an einem Ende an der Schmalseite (18) der Hauptlamelle angeordnet sind.

11. Satz von Formelementen nach einem der Ansprüche 1 bis 3, **dadurch gekennzeichnet, dass** die Verankerungsstücke (16) unterschiedliche Höhen aufweisen.

12. Satz von Formelementen nach einem der vorhergehenden Ansprüche, **dadurch gekennzeichnet, dass** die Mittel zum Zusammenbau (10) in der Umhüllenden der Hauptlamelle und der Sekundärlamelle enthalten sind.

13. Satz von Formelementen nach einem der vorhergehenden Ansprüche, **dadurch gekennzeichnet, dass** die Mittel zum Zusammenbau (10) stoffschlüssig mit ihren jeweiligen Lamellen verbunden sind.

14. Satz von Formelementen nach einem der vorhergehenden Ansprüche, **dadurch gekennzeichnet, dass** der erste Sekundärlamellenteil (3) und der zweite Sekundärlamellenteil (4) einen Winkel α bilden, der von 180° verschieden ist.

15. Satz von Formelementen nach einem der vorhergehenden Ansprüche, **dadurch gekennzeichnet, dass** der erste Sekundärlamellenteil (3) und der zweite Sekundärlamellenteil (4) eine einzige Lamelle bilden.

## Claims

1. Set of moulding elements suitable for being inserted into a mould for moulding a tyre, said set comprising a main strip (1) and at least one secondary strip (2), said secondary strip (2) comprising a first secondary strip portion (3) and a second secondary strip portion (4), said first (3) and second (4) secondary strip portions extending on either side of the main strip (1) and said set of moulding elements comprising means (10) of assembling the secondary strip (2) with the main strip (1), **characterized in that** the assembly means consist:
- of a protuberance (13) arranged on the main strip, capable of being inserted into an opening (14) provided to this end in the secondary strip;
- or of at least one anchor lug (16) arranged on the main strip, capable of engaging with a notch (17) in the secondary strip.

2. Set of moulding elements according to Claim 1, **characterized in that** the second secondary strip portion (4) extends the first secondary strip portion.

3. Set of moulding elements according to Claim 1 or 2, **characterized in that** the secondary strip comprises an intermediate portion (5) between the first and second secondary strip portions.

4. Set of moulding elements according to Claim 3, **characterized in that** the intermediate portion (5) is substantially aligned with the main strip.

5. Set of moulding elements according to any one of Claims 1 to 3, **characterized in that** the height of the protuberance (13) is less than 25% of the height of the main strip, and preferably less than 15% of this height.

6. Set of moulding elements according to any one of Claims 1 to 3, **characterized in that** the height of the opening corresponds to the height of the protuberance.

7. Set of moulding elements according to any one of Claims 1 to 3, **characterized in that** the protuberance comprises an outer lip (15).

8. Set of moulding elements according to any one of Claims 1 to 3, **characterized in that** the height of the anchor lug (16) is equal to at least 30% of the height of the main strip.

9. Set of moulding elements according to any one of Claims 1 to 3, **characterized in that** the width of the anchor lug (16) and the width of the notch (17) are substantially identical.

10. Set of moulding elements according to any one of Claims 1 to 3, **characterized in that** the assembly means comprise at least two anchor lugs (16), arranged at each end on the edge (18) of the main strip.

11. Set of moulding elements according to any one of Claims 1 to 3, **characterized in that** the anchor lugs (16) are different heights.

12. Set of moulding elements according to any one of the previous claims, **characterized in that** the assembly means (10) are contained within the outline of the main strip and the secondary strip.

13. Set of moulding elements according to any one of the previous claims, **characterized in that** the assembly means (10) are integrally formed with their respective strips.

14. Set of moulding elements according to any one of the previous claims, **characterized in that** the first secondary strip portion (3) and the second secondary strip portion (4) form an angle **α** other than 180°.

15. Set of moulding elements according to any one of the previous claims, **characterized in that** the first secondary strip portion (3) and the second secondary strip portion (4) form a single strip.
